Europäisches Patentamt

European Patent Office

Office européen des brevets

(11) Veröffentlichungsnummer: **0 278 274**
**A1**

## (12) EUROPÄISCHE PATENTANMELDUNG

(21) Anmeldenummer: 88100766.0

(22) Anmeldetag: 20.01.88

(51) Int. Cl.⁴ **A23L 1/23** , A23C 19/068

(30) Priorität: 23.01.87 DE 3701836

(43) Veröffentlichungstag der Anmeldung:
17.08.88 Patentblatt 88/33

(84) Benannte Vertragsstaaten:
AT BE CH DE ES FR GB GR IT LI LU NL SE

(71) Anmelder: HOECHST AKTIENGESELLSCHAFT
Postfach 80 03 20
D-6230 Frankfurt am Main 80(DE)

(72) Erfinder: Wink, Joachim, Dr.
Bieberer Strasse 133
D-6050 Offenbach am Main(DE)
Erfinder: Fricke, Ulrich
Am Flachsland 56
D-6233 Kelkheim (Taunus)(DE)
Erfinder: Deger, Hans-Matthias, Dr.
Am Rheingauer Weg 8
D-6238 Hofheim am Taunus(DE)
Erfinder: Mixich, Johann, Dr.
An der Ziegelei 14
D-6233 Kelkheim (Taunus)(DE)
Erfinder: Bauer, Dieter, Dr.
Am Oespeler Dorney 4
D-4600 Dortmund 76(DE)
Erfinder: Justinski, Uwe
Kirchstrasse 53
D-5840 Schwerte 4(DE)

(54) Verfahren zur Herstellung eines Käsearomas.

(57) Durch Inkubation von geeigneten Milchprodukten in dünner Schicht, insbesondere mit Hefen der Gattungen Torulopsis und Candida sowie einem Schimmelpilz der Gattung Penicillium, über einen Zeitraum von 5 bis 7 Tagen können nach anschließender Extraktion Aromakonzentrate verschiedener Käse-Geschmacksrichtungen gewonnen werden.

EP 0 278 274 A1

## Verfahren zur Herstellung eines Käsearomas

Die Verwendung natürlicher Aromastoffe gewinnt immer mehr an Bedeutung. Die Gewinnung eines Schimmelkäsearomas ist dabei besonders aufwendig, da sich der Reifungsprozeß über einen Zeitraum von mehreren Monaten erstreckt. Aus diesem Grund wurde vielfach versucht, ein beschleunigtes fermentatives Verfahren zur Aromagewinnung zu entwicklen. Bei allen bisher beschriebenen Verfahren erfolgte eine submerse Fermentation von Schimmelpilzen. Vorzugsweise P. roqueforti in Milchmedium·mit Zusätzen von unterschiedlichen Fettfraktionen, Lipasen oder lipaseproduzierenden Mikroorganismen. Die Aromastoffe wurden entweder in der Fettphase belassen oder durch Trocknung des Fermentationsansatzes gewonnen. Dabei konnte aber bisher nur annähernd die Qualität von original Schimmelkäse erreicht werden. Als Stand der Technik sind die folgenden Veröffentlichungen bekannt geworden: GB 10 57 170; GB 13 61 817; BRD 15 17 133; DDR 14 74 99; US 31 00 153; US 36 67 968; US 39 73 042; US 41 33 895; US 37 20 520; B.K. Dwivedi und J.E. Kinsa, J. of Food Science 1974, S. 620; R. Jolly und F.V. Kosikowski, J. of Food Science 1975, S. 285; J.N. Nelson, J. Agr. Food Chem. 1970, S. 567; H. Ruttloff, A. Quehl, A. Leuchterberger, Die Nahrung 1984, S. 873.

In den oben aufgeführten Patenten und Veröffentlichungen wurde das Roquefortaroma immer mit einem hohen Ketongehalt gleichgesetzt. Die Auswahl der Vorstufen, der beigefügten Enzyme und der Mikroorganismen erfolgte ausschließlich im Hinblick auf eine gesteigerte Ketonausbeute. Dabei wird jedoch nicht berücksichtigt, daß das original Roquefortaroma sich aus einer Vielzahl von Komponenten zusammensetzt.

In der Europäischen Offenlegungsschrift 0 184 105 wird die Herstellung eines "blue cheese"-Aromakonzentrats beschrieben, das beispielsweise als geschmacksgebende Komponente Salatsoßen, Mayonnaisen, Snacks und Backwaren zugesetzt werden kann. Nach dieser Offenlegungsschrift wird die Milch zuerst mit einer Hefe aus der Gattung Torulopsis beimpft. Nach der Bruchbildung wird die Molke entfernt und der Bruch mit Penicillium roqueforti beimpft. Man kann jedoch die Milch auch gleichzeitig mit beiden Mikroorganismen beimpfen. Nach 3 bis 4 Tagen erhält man ein Käsearoma, das 4 bis 5 mal so konzentriert ist wie in herkömmlich gereiftem Roquefort.

Überraschend wurde nun gefunden, daß durch die Inkubation von Milchprodukten in dünner Schicht mit Käsearoma-produzierenden Mikroorganismen ein breites Aromaspektrum erzielt und die Ausbeute von Käsearoma stark erhöht werden kann.

Die Erfindung betrifft somit ein Verfahren zur Herstellung eines Käsearomas aus Milchprodukten durch Fermentation mit Käsearoma-produzierenden Mikroorganismen, das dadurch gekennzeichnet ist, daß das Milchprodukt mit den Mikroorganismen als Oberflächenkultur in dünner Schicht inkubiert wird, sowie das Käsearoma, das dadurch erhältlich ist.

Im folgenden wird die Erfindung detailliert, insbesondere in ihren bevorzugten Ausführungsformen, erläutert. Ferner wird die Erfindung in den Patentansprüchen definiert.

Als Ausgangsprodukte können alle geeigneten Milchprodukte, die dem Fachmann geläufig sind, verwendet werden. Bevorzugt werden jedoch Quark, Joghurt oder Hüttenkäse sowie zu einem Brei angerührtes Milchpulver eingesetzt. Diese Produkte haben den Vorteil, daß im Vergleich zur herkömmlichen Käseherstellung die Stufe der Bruchbildung nicht mehr durchlaufen werden muß.

Das Ausgangsmaterial wird in dünner Schicht ausgestrichen oder bevorzugt auf einen porösen wasseraufnehmenden Träger aufgezogen. Geeignete Träger sind beispielsweise poröse Kunststoffe oder Tonmaterialien, insbesondere Blähton, z.B. Hydrokultursteine. Die Träger werden vorteilhaft in einer Form verwendet, die gewährleistet, daß das Milchprodukt auf eine große Oberfläche aufgezogen werden kann, denn je größer die Oberfläche desto effektiver das Verfahren. Bevorzugt werden Träger in Kugelform eingesetzt.

Das Ausgangsmedium wird in solch dünner Schicht auf den Träger gebracht, daß eine Oberflächenfermentation möglich ist. Das erreicht man z.B. durch Mischen von Blähton-Kugeln mit dem Milchprodukt, indem beide Komponenten in einem Trommelmischer vermengt werden, wobei die Kugeln anschließend von dem überschüssigen Milchprodukt abgetrennt werden.

Die Inkubation des Milchprodukts erfolgt mit Käsearoma-produzierenden Mikroorganismen, bevorzugt Pilzen. Insbesondere bevorzugt wird mit Hefen der Gattungen Torulopsis und/oder Candida sowie einem aromaproduzierenden Schimmelpilz der Gattung Penicillium, die jeweils in Lebensmitteln verwendet werden können. Die Beimpfung kann vor oder nach dem Ausstreichen bzw. Aufbringen des Ausgangsmaterials auf den Träger geschehen. Sie kann aber auch derart erfolgen, daß zuerst das Ausgangsmaterial mit der Hefe beimpft wird und, gegebenenfalls unter Zusatz von Lipase, einige Stunden inkubiert wird, bevor das Substrat aufgezogen und mit Penicillium beimpft wird.

Als Hefe der Gattungen Torulopsis und Candida haben sich besonders die Art Torulopsis etchelsii und Candida lipolytica sowie Torulopsis-und Candia-Arten mit vergleichbaren Stoffwechsel-Eigenschaften bewährt, wie z.B. T. holmii, T. humilis, T. torresii, T. vanderwaltii, T. versatilis und T. wickerhamii bzw. Candida cylindracea und C. rugosa.

Als Schimmelpilz der Gattung Penicillium kommen bevorzugt Penicillium roqueforti sowie Penicillium camemberti zur Anwendung. Diese Pilze können vom Fachmann leicht von den entsprechenden Käsesorten isoliert werden.

Die Impfmenge an Hefe und Penicillium richtet sich nach der Aktivität des verfügbaren Stammes, die in einfachen Vorversuchen leicht zu ermitteln ist. Diese Impfmengen können in gewissen Bereichen schwanken, wobei höhere Konzentrationen zu einer Beschleunigung des Verfahrens beitragen können.

Gegebenenfalls kann dem Fermentationsmedium Lipase zugegeben werden, un zwar in Mengen von 0,01 bis 1,0 %, bevorzugt 0,1 bis 0,2 %. Anstelle der Lipase können auch lipaseproduzierende Mikroorganismen der Gattungen Penicillium, Aspergillus, Mucor, Rhizopus oder Candida verwendet werden.

Die Fermentation findet zweckmäßig in einem Temperaturbereich von +10° bis 30°C, vorteilhaft von 15 bis 25°C, statt.

Je nach dem mit welcher Penicilliumart man das Medium beimpft, erhält man nach 5 bis 7 Tagen ein Aroma unterschiedlicher Geschmacksrichtung. Wählt man beispielsweise einen Penicillium roqueforti aus Roquefort-Käse so erhält man ein stark nach "blue-cheese" schmeckendes Aroma. Verwendet man aber ein Penicillium roqueforti aus einem milderen "blue-cheese", beispielsweise Danablue oder Rambol, so erhält man ein Aroma das Fachleute als allgemein käsig beschreiben. Wird Penicillium camemberti eingesetzt, so erzielt man einen vollen Camembert-Geschmack.

Um das Aroma aus dem Fermentationsmedium aufzukonzentrieren, wird dieses mit einem niederen Alkohol, vorzugsweise Methanol, bzw. Wasser von dem Träger gespült und homogenisiert und nach Verdünnen mit Wasser und Abtrennen des Feststoffs mit einem unpolaren Lösungsmittel bzw. Lösungsmittelgemisch, wie beispielsweise bevorzugt Pentan/Methylenchlorid, extrahiert. Man kann aber auch das Aroma direkt mit einem unpolaren Lösungsmittel, beispielsweise Pentan oder einem Gemisch aus Pentan und Methylenchlorid, extrahieren.

In dem folgenden Beispiel wird die Erfindung detailliert erläutert. Die für die Impfmengen angegebenen Werte sind Erfahrungswerte mit handelsüblichen bzw. allgemein zugänglichen Stämmen. Prozentangaben beziehen sich auf das Gewicht, wenn nicht anders angegeben.

Beispiel 1

Man stellt Vorkulturen von Torulopsis etchelsii und Penicillium roqueforti durch Inkubation von 2, bzw. 3 bis 5 Tagen, bei 25°C auf folgendem Medium her.

40 g/l Malzextrakt
4 g/l Hefeextrakt
20 g/l Glucose
1 g/l $(NH_4)_2HPO_4$

20 kg Quark werden mit 1 l Kultur von Torulopsis etchelsii für 48 Stunden bei 25°C vermischt und inkubiert. Der Ansatz wird anschließend für die Oberflächenfermentation in einem flachen, temperierbaren Gefäß ausgestrichen und anschließend mit 1 l Kultur von Penicillium roqueforti aus Roquefort beimpft. Die Reifung erfolgt bei 25°C für 5 Tage.

Der Ansatz wird mit 20 l Methanol gemischt und homogenisiert. Nach Zugabe von 200 l Wasser wird der Feststoff abgetrennt. Die Flüssigkeit wird mit 25 l Pentan/Methylenchlorid (2 : 1, V : V) extrahiert. Anschließend wird das Lösungsmittel durch Destillation entfernt.

Man erhält ein 10-bis 15-fach stärkeres "blue-cheese"-Aromakonzentrat als aus Roquefort-Käse bei gleicher Aufarbeitung.

Beispiel 2

Geht man gemäß Beispiel 1 vor, verwendet jedoch statt Penicillium roqueforti aus Roquefort die gleiche Art aus Rambol-Käse, so erhält man ein Aroma der Geschmacksrichtung "allgemein käsig". Bei Verwendung von Penicillium camemberti aus Camembert-Käse erhält man die Geschmacksrichtung Camembert. Die Konzentrationen liegen jeweils in der gleichen Größenordnung wie in Beispiel 1 angegeben.

Beispiel 3

Man verfährt gemäß Beispiel 1 zieht jedoch den Ansatz auf Blähtonkugeln (Hydrokultursteine) auf, indem man diese mit dem Quark mit Hilfe eines Trommelmischers vermischt. Nach dem Abtrennen der Kugeln von dem überschüssigen Quark wird weiter gemäß Beispiel 1 mit Penicillium roqueforti inkubiert.

Man erhält ein 15-bis 20-fach stärkeres "blue-cheese"-Aromakonzentrat als aus Roquefort-Käse.

Beispiel 4

Man verfährt gemäß Beispiel 3, verwendet statt Torulopsis etchelsii jedoch Candida lipolytica und erhält ein 10-bis 12-faches Aromakonzentrat.

Beispiel 5

Man verfährt gemäß Beispiel 1 setzt dem Quark jedoch noch 0,1 % Lipase aus Candida cylindracea (Firma Sigma) zu und erhält ein 15-bis 20-faches Aromakonzentrat.

**Ansprüche**

1. Verfahren zur Herstellung eines Käsearomas aus Milchprodukten durch Fermentation mit Käsearoma-produzierenden Mikroorganismen, dadurch gekennzeichnet, daß das Milchprodukt mit den Mikroorganismen als Oberflächenkultur in dünner Schicht inkubiert wird.

2. Verfahren nach Anspruch 1, dadurch gekennzeichnet, daß als Milchprodukt Quark, Joghurt oder Hüttenkäse sowie zu einem Brei angerührtes Milchpulver eingesetzt wird.

3. Verfahren nach Anspruch 1 oder 2, dadurch gekennzeichnet, daß das Milchprodukt auf einen porösen wasseraufnehmenden Träger aufgezogen wird.

4. Verfahren nach Anspruch 3, dadurch gekennzeichnet, daß als wasseraufnehmender Träger poröser Kunststoff oder Tonmaterialien eingesetzt werden.

5. Verfahren nach einem oder mehreren der Ansprüche 1 bis 4, dadurch gekennzeichnet, daß als Käsearoma-produzierende Mikroorganismen Hefen der Gattungen Torulopsis und/oder Candida sowie Schimmelpilze der Gattung Penicillium eingesetzt werden.

6. Verfahren nach Anspruch 5, dadurch gekennzeichnet, daß mit Torulopsis etchelsii und/oder Candida lipolytica sowie Penicillium roqueforti oder Penicillium camemberti inkubiert wird.

7. Verfahren nach einem oder mehreren der Ansprüche 1 bis 6, dadurch gekennzeichnet, daß unter Zugabe von Lipase oder eines Lipase-produzierenden Mikroorganismus inkubiert wird.

8. Verfahren nach einem oder mehreren der Ansprüche 1 bis 7, dadurch gekennzeichnet, daß in einem Temperaturbereich von 10 bis 30°C inkubiert wird.

9. Verfahren nach Anspruch 8, dadurch gekennzeichnet, daß in einem Temperaturbereich von 15 bis 25°C inkubiert wird.

10. Käsearoma erhältlich nach einem oder mehreren der Verfahren nach Anspruch 1 bis 9.

11. Verwendung des Käsearomas nach Anspruch 10 in Salatsoßen, Mayonnaisen, Snacks und Backwaren.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 184 105  (HOECHST AG) <br> * Seite 1, Absatz 1, Ansprüche 1-8 * <br> --- | 1,5-11 | A 23 L    1/23 <br> A 23 C   19/068 |
| D,A | US-A-3 973 042  (KOSIKOWSKI et al.) <br> * Zusammenfassung, Ansprüche 1, 2 * <br> --- | 1,5-7 | |
| D,A | DE-A-1 517 133  (UNILEVER N.V.) <br> * Ansprüche 1, 4, 8, 9, 15 * <br> --- | 1,5,6 | |
| D,A | US-A-3 720 520  (LUKSAS) <br> * Anspruch 1 * <br> ----- | 1,6 | |

RECHERCHIERTE
SACHGEBIETE (Int. Cl.4)

A 23 L    1/00
A 23 C   19/00

Der vorliegende Recherchenbericht wurde für alle Patentansprüche erstellt

| Recherchenort | Abschlußdatum der Recherche | Prüfer |
|---|---|---|
| BERLIN | 15-04-1988 | SCHULTZE D |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsatze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
....................................................
& : Mitglied der gleichen Patentfamilie, übereinstimmendes
     Dokument

EPO FORM 1503 03.82 (P0403)